# FASCICULE DE BREVET EUROPEEN

(11) **EP 0 731 303 B1**
(45) Date de publication et mention de la délivrance du brevet: **01.09.1999**
(21) Numéro de dépôt: 96420044.8
(22) Date de dépôt: 13.02.1996
(51) Int. Cl.: F16K 13/10

(54) **Vanne statique à congélation, et enceinte de traitement contrôlée par au moins une telle vanne**
Statisches Einfrierungsventil und eine Behandlungskammer mit einem derartigem Ventil
Static freezing valve and a treatment chamber with such a valve

(30) Priorité: 13.02.1995 FR 9501802; 28.02.1995 FR 9502541
(43) Date de publication de la demande: 11.09.1996
(73) Titulaire: BIO MERIEUX, 69280 Marcy l'Etoile (FR)
(72) Inventeur: Colin, Bruno, F-69280 Marcy l'Etoile (FR); Mandrand, Bernard, F-69100 Villeurbanne (FR)
(74) Mandataire: Guerre, Dominique

(56) Documents cités:
- WO-A-90/04927
- WO-A-94/21955
- DE-A- 4 336 283
- US-A- 5 101 848

## Description

La présente invention concerne une vanne à congélation d'un fluide substantiellement monophasique.

Par "fluide", on entend tout corps ou matériau susceptible de s'écouler, pouvant avoir au moins deux formes physiques extrêmes, l'une solide lorsqu'il est refroidi, et l'autre liquide ou visqueuse lorsqu'il est réchauffé à température ambiante. Un fluide selon l'invention peut être aussi bien un liquide qu'un corps ayant une viscosité plus importante, monophasique ou biphasique (solide plus liquide par exemple), le rendant par exemple relativement visqueux. Les corps ou matériaux considérés selon l'invention peuvent être aussi bien des corps purs, que des mélanges divers ou complexes, contenant différents composés ou composants, chimiques, biochimiques, et biologiques. A titre d'exemple, selon la présente invention, le fluide considéré sera par exemple un échantillon biologique, tel qu'une culture cellulaire en milieux aqueux.

Conformément aux documents US-C-4 989 626 et US-C-5 101 848, on a déjà décrit et proposé une vanne statique à congélation d'un fluide, comprenant :
- un élément de conduit agencé pour recevoir ledit fluide dans la section de passage dudit conduit, dont la paroi est conductrice de la chaleur ;
- une seule et même source thermique consistant en un élément thermo-électrique à effet Peltier, disposé à l'extérieur de l'élément de conduit, générant de manière contrôlée et alternative de la chaleur et du froid ; cette source thermique est disposée au contact thermique, notamment en échange de chaleur avec ledit élément de conduit, pour passer alternativement et de manière contrôlée, selon la commande de l'élément thermo-électrique, d'un état froid dans lequel le fluide est susceptible par congélation de boucher de manière étanche le passage au travers dudit élément de conduit, à un état chaud dans lequel ledit fluide est liquéfié en libérant ledit passage.

Selon ce document, la source thermique est donc reportée à l'extérieur de l'élément de conduit à contrôler en tant que vanne.

Par ailleurs, dans ce cas les sources chaude et froide se confondent selon une seule et même source thermique, qui constitue alors une masse parasite qu'il faut alternativement refroidir et chauffer, avant de transférer du froid et de la chaleur respectivement, vers ledit élément de conduit.

Au total, une telle vanne présente une inertie thermique relativement importante s'opposant à des temps de réponse relativement faibles pour passer de l'état ouvert à l'état fermé, ou inversement, ce qui limite ou empêche sa substitution à une vanne traditionnelle, par exemple de type électro-mécanique.

La présente invention a donc pour objet une vanne statique à congélation, présentant une faible inertie thermique, et de ce fait des temps de réponse relativement faibles, tant à l'ouverture qu'à la fermeture.

Conformément à la présente invention, en combinaison :
a) ledit élément de conduit est obtenu en un matériau, notamment métallique, mécaniquement résistant, susceptible de dissiper en son sein de manière contrôlée de la chaleur par effet ohmique, pour constituer une source chaude directement dans sa masse ;
(b) une source froide , distincte de ladite source chaude, agencée et contrôlée pour générer uniquement du froid, demeure seule à l'extérieur dudit élément de conduit, au contact thermique, notamment en échange de chaleur avec ledit élément de conduit.

Grâce aux choix selon l'invention, définis précédemment, il est possible d'obtenir un fonctionnement quasi-instantané de la vanne statique à congélation, notamment en complétant les dispositions précédentes par les modalités suivantes, en combinaison :
- la source froide constitue ou est choisie comme une réserve frigorifique, immobile ou en mouvement, relativement importante par rapport à la quantité de froid nécessaire pour passer de l'état chaud à l'état froid de la vanne ;
- et la chaleur dissipée par effet ohmique dans l'élément de conduit est contrôlée à une valeur relativement importante, au moins égale à celle nécessaire pour annuler ou annihiler temporairement, et localement au niveau de la vanne, le froid transféré par la source froide vers l'élément de conduit, outre la chaleur nécessaire pour faire passer la vanne de l'état froid à l'état chaud.

Grâce à l'invention, on obtient au surplus une vanne statique à congélation, dont l'intérieur, c'est-à-dire la face au contact du fluide dont on se sert pour fermer la vanne à congélation, est incinérable sous l'effet de la chaleur dégagée par effet ohmique, par exemple jusqu'à 600° C. Une telle caractéristique est totalement impossible, et par conséquent absente selon les solutions proposées par les documents US-C-4 989 626 et US-C-5 101 848. Cette caractéristique présente un grand intérêt, notamment dans le domaine des analyses biologiques, car elle permet d'aller au-delà d'une simple stérilisation, en éliminant toute trace de tout échantillon ou matériau biologique, susceptible de contaminer, tant l'environnement que l'intérieur du conduit, par exemple pour une analyse biologique subséquente.

Selon l'invention, on peut disposer d'un conduit, dont les deux extrémités forment chacune un élément de conduit appartenant à une vanne statique à congélation selon l'invention, et par conséquent sont associées chacune à la fois à une source froide et à une source électrique. On obtient ainsi une enceinte de confinement ou confinée, contrôlée à ses deux extrémités respectivement pour le passage d'un fluide, présentant la particularité, d'une part de pouvoir présenter la même section de passage d'un bout à l'autre, y compris à l'emplacement des vannes, et d'autre part d'être incinérable en totalité à l'intérieur, par exemple jusqu'à 600° C. Une telle enceinte de confinement peut être particulièrement utile pour différents traitements, notamment biologiques, pour lesquels il convient à la fois de préserver le matériel biologique dont on dispose, et de stériliser les parois étant venues au contact de ce même matériel.

La vanne à congélation définie précédemment, et l'enceinte confinée contrôlée par lesdites vannes sont particulièrement bien adaptées à tout processus automatisé de traitement de tout fluide, en particulier d'un échantillon biologique, protéique ou nucléique par exemple. Une ou plusieurs vannes à congélation selon l'invention, et une ou plusieurs enceintes de confinement, notamment de traitement, telles que définies précédemment peuvent être intégrées dans différents montages, comme décrit ci-après, être utilisées selon différents protocoles de traitement, notamment automatisés selon toutes séquences d'opérations élémentaires, obtenues à partir d'un même montage.

Par "traitement" au sens de la présente invention, on entend toute opération ou action ayant pour effet de modifier ou transformer un échantillon de fluide. Il peut s'agir aussi bien d'un traitement physique que chimique, ou autre ; il s'agit par exemple d'un traitement de lyse cellulaire, sous l'effet notamment de pressions importantes, permettant de libérer les composants cellulaires tels qu'acides nucléiques, protéines, etc...

La présente invention est maintenant décrite en référence au dessin annexé, dans lequel :
- la figure 1 représente de manière schématique une vanne statique à congélation, selon l'invention ;
- la figure 2 représente un montage dans lequel est inclus une enceinte élémentaire de traitement selon l'invention ;
- les figures 3 et 4 représentent deux autres montages, combinant chacun plusieurs enceintes élémentaires de traitement selon l'invention ;
- les figures 5 et 6 représentent un montage expérimental ayant permis de tester les principes de la présente invention, montré en vue éclatée à la figure 5 et en schéma électrique à la figure 6.

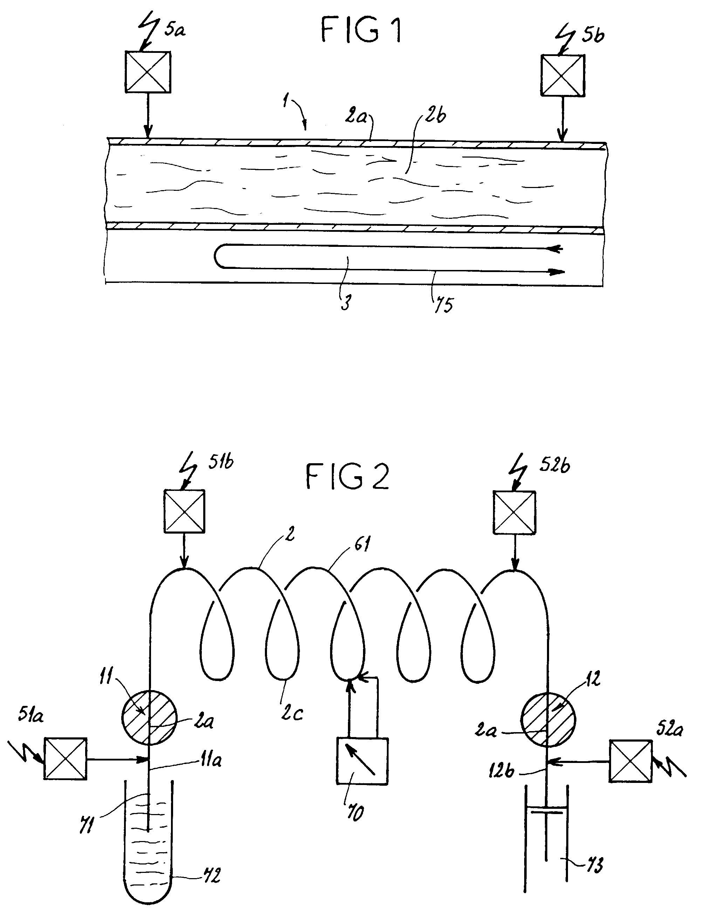

Conformément à la figure 1, une vanne statique 1 à congélation d'un fluide monophasique, par exemple d'un échantillon biologique liquide, comprend un élément de conduit 2a, agencé pour recevoir ledit échantillon, pratiquement dans toute sa section de passage, cette dernière étant identique, en forme et dimensions, d'une extrémité à l'autre de l'élément de conduit. Le conduit 2 auquel appartient l'élément 2a est obtenu en un matériau, notamment métallique, mécaniquement résistant, et susceptible de dissiper en son sein de la chaleur par effet ohmique. Ce matériau peut être autre que métallique, par exemple composite, et incorporer un composant ayant une bonne résistivité électrique. Une source froide 3, comportant un serpentin de circulation 75 d'un fluide frigorigène, est disposée en contact thermique, à savoir en échange de chaleur avec l'élément de conduit 2a. La température et la puissance frigorifique de la source froide sont adaptées à la congélation du fluide, au travers du passage 2b dans l'élément de conduit 2a ; ainsi, si l'échantillon biologique est aqueux, le fluide frigorigène est traditionnellement un fluoro-alcane. Une source chaude est donc directement apportée dans la masse de l'élément de conduit 2a, en prévoyant une source électrique 5, constituée par deux bornes 5a et 5b avec interrupteurs, connectées à l'élément de conduit 2a, pour faire passer dans ce dernier, de manière contrôlée, un courant électrique générant la source chaude précitée. Selon la description précédente, il faut noter que la source froide 3 est distincte de la source chaude résultant de l'effet ohmique, est affectée uniquement à la production de froid, et demeure seule à l'extérieur de l'élément de conduit 2a. L'élément de conduit 2a est dimensionné en relation avec les sources chaude et froide précitées, pour passer rapidement, par exemple dans un temps élémentaire inférieur à 10 secondes, et préférentiellement inférieur à 1 s, d'un état froid dans lequel le fluide est susceptible par congélation de boucher de manière étanche le passage au travers de l'élément de conduit 2a, y compris vis-à-vis de pressions internes relativement importantes, par exemple au moins égales à 50 bars, notamment 150 bars, à un état chaud dans lequel ce même fluide est liquéfié, en libérant le passage 2b dans l'élément de conduit 2a.

Quoique des matériaux composites ne puissent pas être exclus, le matériau de l'élément de conduit 2a est préférentiellement un alliage métallique, par exemple du type cuivre-nickel.

L'élément de conduit 2a a une épaisseur comprise entre 1 µm et 50 mm, préférentiellement, entre 0,001 mm et 2 mm , et avantageusement entre 0,1 et 2 mm. L'élément de conduit 2a a également une section interne au plus égale à 50 mm, et est préférentiellement du type capillaire, pour présenter une section interne comprise entre 0,001 mm et 2 mm.

Pour obtenir une même vanne statique à congélation selon l'invention, de manière non représentée dans le dessin annexé, et selon une variante d'exécution de l'invention, l'élément de conduit 2a est disposé au sein d'une source froide 3, constituant une réserve frigorifique relativement importante par rapport à la quantité de froid pour faire passer la vanne de l'état chaud à l'état froid, par exemple dans une enceinte frigorifique contenant un liquide réfrigérant, par exemple de l'éthylène-glycol, lui-même refroidi par un circuit frigorigène, mais de puissance frigorifique relativement faible ; tandis que la chaleur dissipée par effet ohmique dans l'élément de conduit 2a est contrôlée à une valeur relativement importante, au moins égale à celle nécessaire pour annuler temporairement, et localement au niveau de la vanne, le froid transféré par la source froide vers l'élément de conduit, outre la chaleur nécessaire pour faire passer la vanne de l'état froid à l'état chaud.

La réserve frigorifique relativement importante peut être obtenue d'une autre manière, par exemple en faisant circuler en permanence un liquide réfrigérant, dans un conduit de circulation en échange de chaleur avec l'élément de conduit de la vanne.

Conformément à la présente invention, selon une étape élémentaire de contrôle, de manière quasi-instantanée, on contrôle le fluide, reçu dans l'élément de conduit 2a, immobile ou en mouvement, successivement :
- en congelant le fluide au travers du passage 2b, grâce à la source froide 3, pour obturer l'élément de conduit 2a, et par conséquent fermer le conduit 2 ;
- et en faisant passer un courant électrique 5 dans la masse de l'élément de conduit 2a, dissipant par effet ohmique de la chaleur, transférée directement au fluide, on fait fondre le fluide congelé au travers du passage 2b, en libérant ce dernier, et par conséquent en ouvrant la vanne.

En conclusion, à la manière d'une électrovanne, une vanne à congélation selon l'invention peut être ouverte ou fermée à volonté, en commandant uniquement le passage d'un courant électrique dans l'élément de conduit 2a, ce qui rend en particulier sa commande particulièrement aisée, par rapport à celle d'un élément thermo-électrique à effet Peltier.

Dans la description ci-après, par conséquent, par ouverture et fermeture d'une vanne selon l'invention, on entendra respectivement les opérations décrites précédemment, de liquéfaction et congélation respectivement, du fluide présent dans l'élément de conduit.

Conformément à la figure 2, on obtient une enceinte élémentaire de traitement, allongée, à partir d'un conduit 2, à savoir un tube métallique enroulé en hélice 61, dont deux éléments d'extrémité 2a sont associés chacun à la fois à une source froide et à une source électrique, respectivement 51a/51b et 52a/52b, pour constituer deux vannes 11 et 12 respectivement, selon l'invention.

Du fait du montage électrique explicité précédemment, une source électrique, en l'occurrence 51b/52b se trouve connectée à la portion 2c du conduit 2, confinée, comprise entre les deux vannes 11 et 12, pour faire passer dans ladite portion un courant électrique, dissipant directement de la chaleur dans ledit conduit, par effet ohmique.

L'enceinte élémentaire de traitement et ses vannes de contrôle 11 constituent un seul et même conduit ayant la même section interne selon toute sa longueur.

Bien entendu, de manière non représentée, une seule et même source électrique peut être connectée à la fois à la portion confinée 2c du conduit 2, et aux éléments 2a de conduit appartenant aux deux vannes 11 et 12 respectivement. Et des moyens de connexion électrique, non représentés, sont agencés pour faire passer un courant électrique dans cette portion confinée 2c, et/ou les éléments de conduit 2a, de manière contrôlée, selon toute séquence préétablie de branchements électriques élémentaires de la portion confinée 2c et/ou des éléments de conduit 2a. Par exemple, ces moyens de connexion électrique comprennent au moins un contact ou borne électrique avec le conduit 2, agencé de manière mobile selon la direction ou longueur de ce dernier, pour inclure la portion confinée 2c, et/ou les éléments de conduit 2a, de manière contrôlée, dans un circuit électrique.

De la même manière, chaque vanne statique à congélation 11 ou 12 peut être déplacée selon la direction ou longueur du conduit 2, en agençant de manière mobile la source froide 3, et/ou les contacts électriques 51a/51b, 52a/52b, le long du conduit 2.

Dans le sens de circulation d'un échantillon biologique à traiter, de la gauche vers la droite de la figure 2, l'entrée 11a de la vanne 11, et par conséquent amont, est reliée à un moyen 71 de prélèvement de l'échantillon dans un tube 72, et la sortie 12b de la vanne 12, et par conséquent aval, est reliée à un moyen de circulation ou pompage 73 de l'échantillon. Des moyens 70 de contrôle de la pression et/ou température dans la portion de confinement 2c, sont prévus.

Grâce aux dispositions montrées à la figure 2, les deux vannes 11 et 12 selon l'invention délimitent une portion ou zone 2c de confinement, et les deux vannes 11 et 12 contrôlent le passage du fluide traité dans la zone précitée. Et en faisant passer un courant électrique dans la masse du conduit 2, on dissipe par effet ohmique de la chaleur, directement dans la zone 2c de confinement, laquelle est transférée directement au fluide traité, lequel voit alors sa température et/ou sa pression augmenter, en relation avec la quantité de chaleur ainsi transférée.

Le montage selon la figure 2 peut être utilisé pour une lyse cellulaire, de la manière suivante:
- par actionnement de la pompe 73, et par le moyen de prélèvement 71, on aspire dans le conduit 2 un échantillon provenant notamment d'un prélèvement ou d'une culture cellulaire, remplissant notamment la portion confinée 2c ;
- on ferme successivement les vannes 12 et 11, de telle sorte que l'échantillon se trouve emprisonné entre les vannes 11 et 12 ;
- on fait passer un courant électrique entre les bornes 51b et 52b, de manière contrôlée, dans la portion confinée 2c, ce qui élève la température, et par conséquent la pression dans la zone 2c, et a pour conséquence de lyser les cellules contenues dans le fluide traité ;
- en ouvrant les vannes 11 et 12, on récupère l'échantillon traité.

Le moyen de circulation 73 peut être supprimé, en opérant de la manière suivante :
- les vannes 11 et 12 étant ouvertes, on fait circuler un courant électrique dans la portion confinée 2c, de telle manière que le conduit 2 s'échauffe et se vide de son air ;
- on cesse cette circulation électrique, on ferme la vanne 12, et on refroidit le tube 2, de telle sorte qu'il se crée un vide partiel dans le tube 2, lequel a pour effet, si le moyen de prélèvement 71 est plongé dans un échantillon liquide dans le tube 72, de prélever par aspiration ledit échantillon, jusque dans la portion confinée de traitement 2c ;
- le traitement se poursuit alors comme précédemment, à partir de l'obturation de la vanne 11.

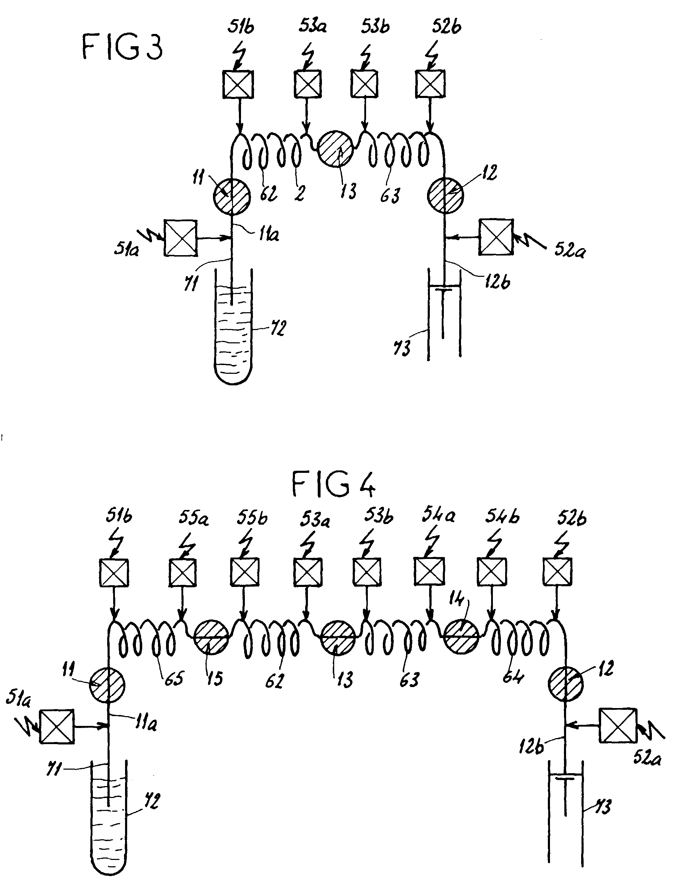

Conformément au montage de la figure 3, deux enceintes élémentaires 62 et 63, telles que définies précédemment, sont disposées en série, et séparées entre elles par une vanne 13 statique à congélation, selon l'invention. Cette vanne 13 peut être elle-même pourvue d'un étranglement, c'est-à-dire d'une section de passage plus faible que sur le reste du conduit 2.

La vanne statique 13 à congélation est commandée par les bornes électriques 53a et 53b, tandis que l'alimentation électrique des enceintes élémentaires 62 et 63 peut être commandée respectivement par les bornes électriques 51b et 53a, et 53b et 52b.

Le montage de la figure 3 peut être mis en oeuvre de la manière suivante, toujours pour lyser un échantillon provenant notamment d'un prélèvement ou d'une culture cellulaire :
(a) les vannes 11 à 13 étant ouvertes, par la pompe 73, on aspire un échantillon dans le conduit 2, et on ferme les vannes 13 puis 11 ;
(b) en appliquant un courant électrique dans l'enceinte 62, on élève la température et/ou la pression de l'échantillon traité, comme précédemment ;
(c) on ferme la vanne 12, et on ouvre la vanne 13, de telle sorte que l'échantillon traité se trouve propulsé au travers de l'étranglement prévu dans la vanne 13, de l'enceinte de traitement 62 à l'enceinte de traitement 63 ;
(d) en fermant la vanne 13, et en appliquant un courant électrique dans l'enceinte 63, on élève à nouveau la température, et donc la pression dans la zone 63 ;
(e) la vanne 11 étant demeurée fermée, en ouvrant la vanne 13, l'échantillon traité se trouve à nouveau propulsé de l'enceinte 63 à l'enceinte 62, au travers de l'étranglement de la vanne 13 ;
(f) et ainsi de suite, si nécessaire.

On obtient ainsi une lyse cellulaire particulièrement efficace.

Le montage de la figure 3 peut être utilisé d'une autre manière, selon laquelle l'enceinte 62 sert d'enceinte de traitement, et l'enceinte 63 d'enceinte de capture d'un constituant biologique de l'échantillon traité, par exemple nucléique. A cette fin, les parois internes du conduit 2 dans l'enceinte 63 sont préalablement traitées, par exemple avec tout ligand ou anti-ligand spécifique du matériel biologique à capturer, par exemple des anticorps, des oligonucléotides, des protéines, des peptides, etc...

Le montage de la figure 3 demeure utilisé, dans ce cas, comme décrit précédemment, sauf que l'étape (d) est utilisée pour capturer le constituant biologique, et donc pour appauvrir l'échantillon traité en ledit constituant, et lors de l'étape (e), l'échantillon traité est évacué par la vanne 12.

Après un ou plusieurs lavages de l'enceinte 63 de capture, les constituants biologiques sont libérés dans un volume inférieur au volume de l'échantillon de départ, ce qui permet donc d'enrichir l'échantillon final à traiter, en ledit constituant biologique recherché.

La lyse cellulaire dans l'enceinte 62 peut être obtenue autrement que par chauffage, par exemple en appliquant des ultra-sons au sein de l'enceinte 62.

Différents systèmes de détection optique, électro-chimique, ou radioactivité peuvent être associés aux enceintes 62 et 63.

Le montage de la figure 4 associe en série quatre zones élémentaires de traitement selon l'invention, respectivement de la gauche vers la droite de ladite figure, 65, 62, 63 et 64, séparées par des vannes selon l'invention, à savoir respectivement 11 et 15, 15 et 13, 13 et 14, et 14 et 12. Comme précédemment, chacune de ces enceintes peut être chauffée par passage d'un courant électrique. Un tel montage s'avère particulièrement utile, lorsque l'échantillon biologique traité ne doit pas être chauffé ou soumis à des pressions particulièrement importantes. Pour ce faire, on opère alors de la manière suivante, au moyen de la pompe 73 :
- aspiration et confinement d'un échantillon biologique dans l'enceinte 62, entre les deux vannes 15 et 13 fermées ;
- aspiration et confinement dans la zone 65 d'un autre fluide, en l'occurrence un liquide neutre comme de l'eau ou un tampon, entre les vannes 11 et 15 ;
- chauffage de l'enceinte 65, pour augmenter la pression du liquide neutre dans l'enceinte 65 ;
- fermeture de la vanne 14, et ouverture des vannes 13 et 15, de telle sorte que l'échantillon biologique est poussé au travers de la vanne 13, pourvue éventuellement d'un étranglement, par le liquide neutre de l'enceinte 65, de l'enceinte 62 à l'enceinte 63 ;
- aspiration et confinement dans l'enceinte 64, entre les vannes 14 et 12 fermées, d'un liquide neutre comme précédemment ; chauffage de ce liquide par passage d'un courant électrique dans l'enceinte 64 ;
- fermeture de la vanne 15 et ouverture des vannes 14 et 13, de telle sorte que l'échantillon biologique se trouve poussé au travers de la vanne 13, de l'enceinte 63 à l'enceinte 62, sous l'effet du liquide neutre sous haute pression, présent dans l'enceinte 64 ;
- et ainsi de suite, en considérant l'ouverture ou la fermeture appropriée des vannes précédemment et respectivement considérées.

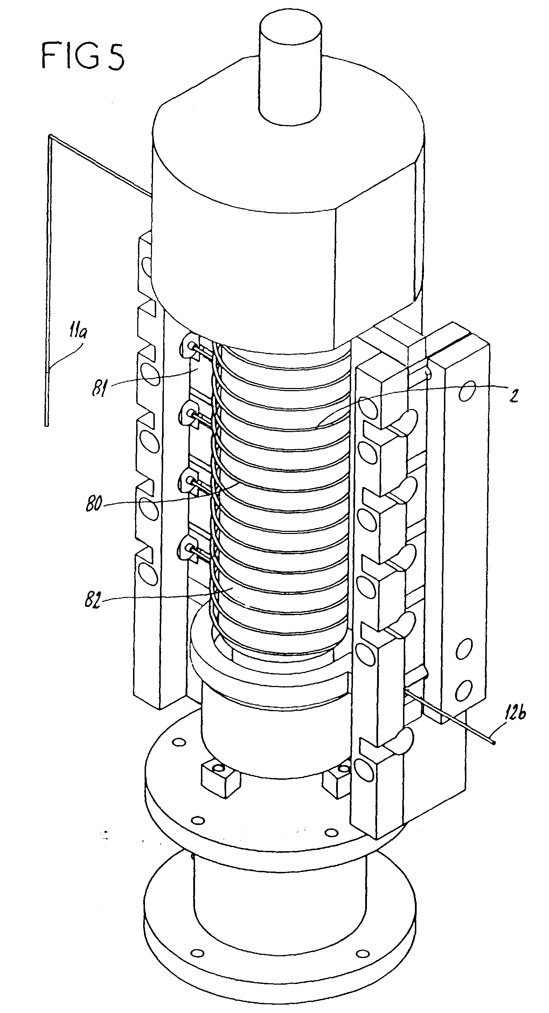

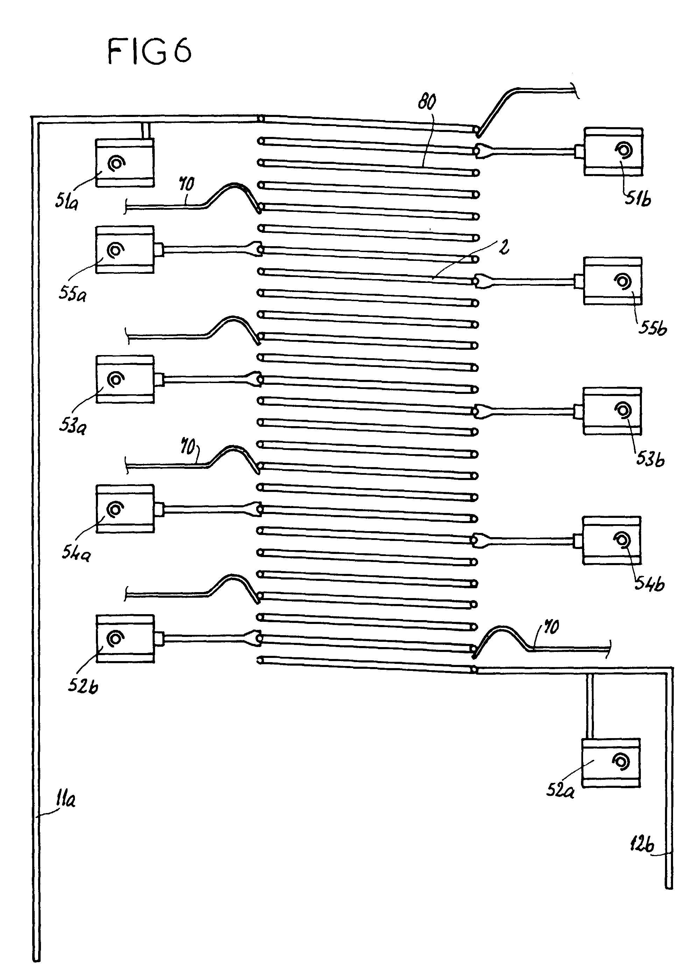

Le montage expérimental des figures 5 et 6 correspond au schéma de principe de la figure 4, de telle sorte que les références numériques communes désignent les mêmes éléments ou moyens. Un conduit métallique unique 80, sous la forme d'un serpentin rassemblant en continuité d'écoulement les enceintes 65, 62, 63 et 64, est disposé verticalement à l'intérieur d'une chambre 81 isolée thermiquement. Un autre serpentin 82, pour la circulation en continu d'un liquide réfrigérant est disposé dans la même chambre 81, en échange de chaleur avec le conduit 2 sous la forme du serpentin 80, les spires du serpentin 82 étant enroulées de manière adjacente à celles du serpentin 80. Ne pénètrent à l'intérieur de la chambre 81 que le tube d'entrée 11a et le tube de sortie 12b, différentes sondes thermiques 70, sous la forme de thermocouples et les bornes électriques correspondant aux relais 51a et 51b, 55a et 55b, 53a et 53b, 54a et 54b, 52a et 52b.

Des moyens de connexion électriques, non représentés, établissent des branchements avec les relais ou bornes électriques de connexion précitées, pour inclure les différentes portions confinées 65, 62, 63 et 64, et les différents éléments de conduit constituant les vannes à congélation, de manière contrôlée dans un circuit électrique, en fonction du processus de traitement retenu pour l'échantillon biologique introduit par le tube d'entrée 11a, et évacué complètement traité par le tube de sortie 12b.

### EXEMPLE : Lyse d'un isolat de Staphylococcus epidermis

Une souche d'un isolat de *S*. *epidermis* a été testée, en ce qui concerne sa lyse, avec le montage expérimental décrit par référence aux Figures 5 et 6, mais limité à une seule enceinte de traitement selon la Figure 2. Une culture bactérienne, ayant eu lieu la nuit précédente, a été décomptée par voie optique, et une dilution de cette dernière par le facteur dix a été essayée et analysée, pour rechercher la présence d'acides nucléiques, avant et après la lyse dans le montage expérimental précité.

La lyse dans le montage expérimental a été effectuée comme suit :

Le montage expérimental est porté à la température ambiante, 2 ml de la suspension bactérienne à tester sont introduits dans le conduit capillaire 2. Après que le conduit ait été congelé par défaut au-dessous de -20°C (c'est-à-dire avec une congélation de toute la suspension bactérienne), la section interne du conduit est chauffée à 100°C pendant 5 secondes, tandis que les deux extrémités 11 et 12 du même conduit demeurent congelées, et constituent ainsi deux vannes qui délimitent l'enceinte ou chambre réactionnelle, c'est-à-dire de lyse. La section interne est, à nouveau, congelée pendant 5 secondes. Après réchauffement à la température ambiante, ce qui est maintenant devenu un lysat est récupéré en l'évacuant du conduit, et on procède à une analyse pour détecter la présence d'acides nucléiques.

Le réemploi du conduit pour un nouvel essai impose une stérilisation moléculaire, ou incinération, effectuée comme suit : le conduit est lavé par introduction et passage de 3 ml d'eau distillée, puis il est vidé et finalement chauffé selon toute sa longueur, à 400°C pendant 5 secondes.

L'analyse des acides nucléiques est effectuée comme suit : pour une concentration de l'ordre de 10⁹ à 10⁸ bactéries/200 µl, l'ARNr présent dans le lysat correspondant est hybridé dans un appareil d'immuno-essai VIDAS (marque enregistrée), en utilisant une sonde de capture eubactérienne (S8L), et une sonde de détection conjuguée (E2 20) marquée à la phosphatase alcaline, et le signal d'hybridation est exprimé en UFR (Unités de Fluorescence Relative). Pour une concentration de 10⁵ à une bactérie/10 µl, l'ADNr présent dans le lysat correspondant a été amplifié par PCR, avec les amorces SPI-1 et SPI-4, et le produit de PCR a été hybridé dans un appareil VIDAS, en utilisant la sonde de capture SPI-5, et la sonde de détection SPI-6.

Les séquences des oligonucléotides d'ADN sont comme suit :

Les étapes d'hybridation dans l'appareil VIDAS étaient les suivantes : à la fin de l'étape de lyse dans le montage expérimental, le lysat (200 µl ou 10 µl) a été placé dans une barrette en polypropylène, comportant 10 puits, de l'appareil VIDAS (BIOMERIEUX, Marcy l'Etoile, France). Cette barrette était préalablement remplie avec tous les réactifs nécessaires pour l'hybridation, dans des puits séparés : diluant, sonde marquée, tampons d'hybridation et de lavage, et substrat. La barrette chargée est disposée dans les tiroirs de l'appareil VIDAS, et toutes les étapes suivantes du protocole d'hybridation non radioactive sont effectuées automatiquement, pendant 1,5 heure à 37°C. Les deux oligonucléotides sont utilisés dans un format d'hybridation sandwich, tel que décrit dans le document FR-A-2 663 040. Un oligonucléotide revêt l'intérieur de la surface solide de l'extrémité de la pipette, dite Réceptacle à Phase Solide (SPR, marque enregistrée), et agit comme sonde de capture. Un deuxième oligonucléotide, lié de manière covalente à la phosphatase alcaline, est utilisé comme sonde de détection, ayant pour cible l'ARNr 16S, ou l'ADNr amplifié par PCR. Une fois l'essai terminé, le substrat de la phosphatase alcaline, à savoir le 4-méthylumbelliferyl-phosphate, est prélevé par pompage du puits terminal, qui est une cuvette optiquement claire. L'enzyme catalyse sa transformation en produit fluorescent, à savoir la 4-méthylumbelliferone. L'intensité de la fluorescence dans la cuvette est mesurée par le scanner optique de l'appareil VIDAS, avant et après contact avec le SPR. Les résultats sont ensuite analysés automatiquement, et exprimés en unités UFR, grâce à l'interface informatisée. Les valeurs d'essais sont générées pour chaque échantillon, par soustraction de la valeur à blanc (lecture du substrat dans la cuvette), de la valeur de fluorescence de l'échantillon. Les valeurs d'essais sont comparées avec une valeur de seuil, pour donner une interprétation qui est ensuite imprimée par l'appareil. Des valeurs d'essais inférieures à 200 UFR sont considérées comme des résultats négatifs. Des valeurs d'essais supérieures ou égales à 200 UFR sont considérées comme des résultats positifs, et démontrent ainsi la présence des acides nucléiques cibles (ARN ou ADNr).

Les résultats ainsi obtenus sont les suivants :

| **Méthode analytique** | **Inoculum de** *S. epidermis* | **Résultats d'hybridation (UFR)** | |
|---|---|---|---|
| | | | |
| | | non lysé | lyse selon l'invention |
| | | | |
| 200 µl - | 10 9 | 640 | 6925 |
| hybridation de l'ARN naturel | 10 8 | 481 | 5512 |
| | | | |
| 10 µl - | 10 5 | 10 1 | 4234 |
| hybridation d'ADNr amplifié par PCT | 10 4 | 94 | 5898 |
| | 10 3 | 98 | 7070 |
| | 10 2 | 98 | 10915 |
| | 10 | 94 | 7746 |
| | 1 | 96 | 2235 |
| | 0 | 75 | 185 |
| | | | |

Ces résultats indiquent qu'une lyse partielle a été obtenue pour des inoculum à forte concentration en bactéries, avant lyse selon l'invention (bactéries remises en suspension dans de l'eau distillée : valeurs de 640 et 481 UFR) ; ceci est probablement dû à la pression osmotique, qui demeure néanmoins beaucoup moins efficace que la lyse par chocs thermiques en utilisant un conduit capillaire selon l'invention. Pour des inoculum à faible concentration en bactéries, la lyse de *S*. *epidermis* est obtenue, puisque l'ADNr est amplifié de manière effective, jusqu'à une concentration d'une bactérie.

Bien entendu, et c'est un avantage essentiel obtenu selon l'invention, l'ensemble de chaque montage peut être complètement stérilisé ou décontaminé, vis-à-vis de toute espèce moléculaire telle qu'acide nucléique, après chaque traitement, notamment par passage d'un courant électrique, dans la totalité du conduit 2, par exemple du moyen de prélèvement 71 à l'entrée de la pompe 73 selon le montage de la figure 4, et par conséquent dans toutes les vannes selon l'invention, et dans toutes les portions confinées ou enceintes élémentaires selon l'invention.

## Revendications

1. Vanne (1) statique à congélation d'un fluide comprenant :
- un élément (2a) de conduit agencé pour recevoir ledit fluide dans la section de passage (2b), dont la paroi est conductrice de la chaleur ;
- au moins une source thermique générant de manière contrôlée de la chaleur et du froid, disposée au contact thermique, notamment en échange de chaleur avec ledit élément (2a) de conduit, pour passer d'un état froid, dans lequel le fluide est susceptible par congélation de boucher de manière étanche le passage (2a) au travers dudit élément de conduit, à un état chaud dans lequel ledit fluide est liquéfié ou vaporisé en libérant ledit passage ;
**caractérisée en ce que,** en combinaison :
(a) ledit élément de conduit (2a) est obtenu en un matériau, notamment métallique, mécaniquement résistant, susceptible de dissiper en son sein, de manière contrôlée, de la chaleur par effet ohmique, pour constituer une source chaude directement dans sa masse ;
(b) une source froide (3), distincte de ladite source chaude, agencée et contrôlée pour générer uniquement du froid, demeure seule, à l'extérieur dudit élément (2a) de conduit, au contact thermique, notamment en échange de chaleur avec ledit élément de conduit.

2. Vanne selon la revendication 1, caractérisée en ce que la source froide (3) constitue une réserve frigorifique relativement importante par rapport à la quantité de froid nécessaire pour passer de l'état chaud à l'état froid de ladite vanne, et la chaleur dissipée par effet ohmique dans l'élément de conduit est contrôlée à une valeur relativement importante, au moins égale à celle nécessaire pour annuler temporairement, et localement au niveau de ladite vanne, le froid transféré par la source froide vers ledit élément de conduit, lors du passage de l'état froid à l'état chaud de ladite vanne.

3. Vanne selon la revendication 2, caractérisée en ce que l'élément de conduit (2a) est disposé dans une enceinte contenant un bain réfrigérant, formant la source froide (3).

4. Vanne selon la revendication 2, caractérisée en ce que l'élément de conduit (2a) est disposé en échange de chaleur avec un conduit de circulation d'un liquide réfrigérant.

5. Vanne selon la revendication 1, caractérisée en ce que le matériau métallique de l'élément de conduit (2a) est un alliage métallique.

6. Vanne selon la revendication 1, caractérisée en ce que l'élément de conduit (2a) a une épaisseur comprise entre 1 µm et 50 mm, et préférentiellement entre 0,001 mm et 2 mm, et avantageusement entre 0,1 et 2 mm.

7. Vanne selon la revendication 6, caractérisée en ce que l'élément de conduit (2a) a une section interne au plus égale à 50 mm, et préférentiellement comprise entre 0,001 mm et 2 mm.

8. Enceinte (61) élémentaire allongée, équipée d'au moins une vanne selon l'une quelconque des revendications 1 à 5, caractérisée en ce que ladite enceinte est constituée d'une extrémité à l'autre par ledit conduit (2), ayant notamment la même section de passage selon toute sa longueur, dont au moins un élément (2a) associé à la fois à la source froide (3) et à une source électrique (5) constitue ladite vanne (11,12).

9. Enceinte (61) selon la revendication 8, caractérisée en ce que l'élément (2a) de conduit appartenant à ladite vanne (11,12) est disposé à une extrémité dudit conduit.

10. Enceinte (61) selon les revendications 8 et 9, caractérisée en ce que deux vannes (11,12) sont agencées aux deux extrémités dudit conduit respectivement, lesdites extrémités constituant les deux éléments de conduit (2a) des deux vannes (11,12) respectivement.

11. Enceinte selon la revendication 8, caractérisée en ce que la source froide (3) et le ou les contacts électriques (5a,5b) avec l'élément de conduit (2a) appartenant à ladite vanne (11,12), sont agencés de manière mobile le long dudit conduit, moyennant quoi la vanne peut être déplacée selon la direction dudit conduit.

12. Enceinte (61) selon la revendication 10, caractérisée en ce que une source électrique (51b,52b) est connectée à la portion (2c) de conduit, confinée, comprise entre les deux vannes (11,12), pour faire passer de manière contrôlée dans ladite portion un courant électrique, dissipant directement de la chaleur dans ledit conduit, par effet ohmique.

13. Enceinte (61) selon la revendication 12, caractérisée en ce qu'une seule et même source électrique est connectée à la fois à la portion confinée (2c) de conduit, et à l'élément (2a) de conduit d'au moins une vanne (11,12), et des moyens de connexion électrique sont agencés pour faire passer un courant électrique dans ladite portion confinée et/ou ledit élément de conduit, de manière contrôlée, notamment selon toute séquence préétablie de branchements électriques élémentaires de ladite portion confinée et/ou dudit élément de conduit.

14. Enceinte (61) selon la revendication 13, caractérisée en ce que les moyens de connexion électrique comprennent au moins un contact électrique avec ledit conduit (2), agencé de manière mobile selon la direction de ce dernier, pour inclure ladite portion confinée (2c) et/ou ledit élément de conduit (2a), de manière contrôlée, dans un circuit électrique.

15. Enceinte (61) selon la revendication 13, caractérisée en ce que les moyens de connexion électrique comprennent une pluralité de bornes de connexion électrique, distribuées selon la direction du conduit, et des branchements électriques agencés avec lesdites bornes de connexion, pour inclure ladite portion confinée (2c) et/ou ledit élément de conduit (2a), de manière contrôlée dans un circuit électrique.

16. Dispositif de traitement d'un échantillon du fluide, comprenant une enceinte (61) élémentaire selon l'une quelconque des revendications 8 à 15, caractérisé en ce que l'entrée (11a) d'une vanne statique (11) à congélation, amont selon le sens de circulation ou traitement dudit échantillon, est reliée à un moyen (71) de prélèvement dudit échantillon, et la sortie (12b) d'une autre vanne statique (12) à congélation, aval, est reliée à un moyen de circulation (73) dudit échantillon, par exemple une pompe.

17. Application d'une enceinte élémentaire selon l'une quelconque des revendications 8 à 14, au traitement d'un échantillon dudit fluide, notamment d'un échantillon biologique, dans la portion confinée (2c) du conduit (2).

18. Procédé de contrôle d'un courant fluide substantiellement monophasique, reçu dans un conduit (2), selon lequel, dans au moins une étape de contrôle, alternativement on congèle ledit fluide au travers du passage (2b) dans ledit conduit, pour obturer ce dernier, et on fait fondre ledit fluide congelé au travers du même dit passage, pour libérer ce dernier, caractérisé en ce que, pendant l'étape de contrôle, on fait fondre ledit fluide, en faisant passer un courant électrique (5) dans la masse du conduit, dissipant par effet ohmique de la chaleur, transférée directement audit fluide.

19. Procédé de confinement d'un fluide monophasique, mettant en oeuvre au moins une étape de contrôle d'un courant dudit fluide selon la revendication 18, caractérisé en ce qu'on délimite une portion dudit conduit, formant zone (2c) de confinement, et à chacune des deux extrémités de ladite zone, on contrôle (11,12) le passage du fluide selon au moins une dite étape de contrôle de la revendication 18.

20. Procédé selon la revendication 19, caractérisé en ce qu'on chauffe la zone (2c) de confinement, en faisant passer un courant électrique dans la masse du conduit, dissipant par effet ohmique de la chaleur, transférée directement audit fluide, lequel voit sa température et/ou sa pression augmenter, en relation avec la quantité de chaleur transférée.

## Patentansprüche

1. Statisches Einfrierungsventil (1) für ein Fluid, mit:
- einem Leitungselement (2a), das zum Aufnehmen des Fluids in dem Durchgangsquerschnitt (2b) ausgebildet ist, dessen Wand wärmeleitend ist;
- zumindest einer thermischen Quelle, die kontrolliert Wärme und Kälte erzeugt, und die mit dem Leitungselement (2a) im thermischen Kontakt, insbesondere im Wärmeaustausch, steht, um von einem kalten Zustand, in dem das Fluid in der Lage ist, durch Einfrierung den Durchgang (2a) durch das Leitungselement hindurch dicht zu verstopfen, in einen warmen Zustand überzugehen, in dem das Fluid verflüssigt oder verdampft wird und dabei den Durchgang freigibt,
dadurch gekennzeichnet, daß, in Kombination:
(a) das Leitungselement (2a) aus einem mechanisch widerstandsfähigen, insbesondere metallischen, Material gefertigt ist, das in der Lage ist, gesteuert Wärme durch Ohm'schen Effekt in sich zu dissipieren, um unmittelbar in seinem Körper eine Wärmequelle zu bilden;
(b) eine Kältequelle (3), die von der Wärmequelle verschieden ist, und die dazu ausgebildet und gesteuert ist, einzig und allein Kälte zu erzeugen, in thermischem Kontakt, insbesondere im Wärmeaustausch mit dem Leitungselement stehend allein außerhalb des Leitungselements (2a) bleibt.

2. Ventil nach Anspruch 1, dadurch gekennzeichnet, daß die Kältequelle (3) eine bezüglich der zum Übergehen des Ventils vom warmen Zustand in den kalten Zustand notwendigen Kältemenge relativ hohe Kühlreserve bildet, und daß die durch Ohm'schen Effekt in dem Leitungselement dissipierte Wärme auf einen relativ hohen Wert gesteuert ist, der zumindest gleich demjenigen ist, der erforderlich ist, um die von der Kältequelle auf das Leitungselement übertragene Kälte während des Übergangs des Ventils vom kalten Zustand in den warmen Zustand zeitweise und örtlich auf Höhe des Ventils aufzuheben.

3. Ventil nach Anspruch 2, dadurch gekennzeichnet, daß das Leitungselement (2a) in einem Behältnis angeordnet ist, das ein Kühlbad enthält, das die Kältequelle (3) bildet.

4. Ventil nach Anspruch 2, dadurch gekennzeichnet, daß das Leitungselement (2a) im Wärmeaustausch mit einer Umwälzleitung für eine Kühlflüssigkeit angeordnet ist.

5. Ventil nach Anspruch 1, dadurch gekennzeichnet, daß das metallische Material des Leitungselements (2a) eine metallische Legierung ist.

6. Ventil nach Anspruch 1, dadurch gekennzeichnet, daß das Leitungselement (2a) eine Dicke aufweist, die im Bereich zwischen 1 µm und 50 mm, bevorzugt zwischen 0,001 mm und 2 mm, und vorteilhafterweise zwischen 0,1 und 2 mm liegt.

7. Ventil nach Anspruch 6, dadurch gekennzeichnet, daß das Leitungselement (2a) einen Innenquerschnitt von höchstens gleich 50 mm und bevorzugt im Bereich zwischen 0,001 mm und 2 mm aufweist.

8. Längliche elementare Zelle (61), die mit zumindest einem Ventil nach einem der Ansprüche 1 bis 5 ausgestattet ist, dadurch gekennzeichnet, daß die Zelle von einem Ende zum anderen durch die Leitung (2) gebildet ist, die insbesondere den gleichen Durchgangsquerschnitt über ihre gesamte Länge aufweist, von der zumindest ein Element (2a), das der Kältequelle (3) und zugleich einer Stromquelle (5) zugeordnet ist, das Ventil (11, 12) bildet.

9. Zelle (61) nach Anspruch 8, dadurch gekennzeichnet, daß das Leitungselement (2a), das zu dem Ventil (11, 12) gehört, an einem Ende der Leitung angeordnet ist.

10. Zelle (61) nach den Ansprüchen 8 und 9, dadurch gekennzeichnet, daß zwei Ventile (11, 12) an beiden Enden der Leitung ausgebildet sind, wobei die Enden die jeweiligen Leitungselemente (2a) der beiden Ventile (11, 12) bilden.

11. Zelle nach Anspruch 8, dadurch gekennzeichnet, daß die Kältequelle (3) und der oder die elektrischen Kontakte (5a, 5b) an dem Leitungselement (2a), das zu dem Ventil (11, 12) gehört, entlang der Leitung beweglich ausgebildet sind, wodurch das Ventil in der Richtung der Leitung verschoben werden kann.

12. Zelle (61) nach Anspruch 10, dadurch gekennzeichnet, daß eine Stromquelle (51b, 52b) an den Leitungsabschnitt (2c) angeschlossen ist, der zwischen den beiden Ventilen (11, 12) eingegrenzt ist, um in diesem Abschnitt einen elektrischen Strom gesteuert fließen zu lassen, der in der Leitung durch Ohm'schen Effekt unmittelbar in Wärme dissipiert wird.

13. Zelle (61) nach Anspruch 12, dadurch gekennzeichnet, daß eine einzige Stromquelle an den eingegrenzten Leitungsabschnitt (2c) und zugleich an das Leitungselement (2a) zumindest eines Ventils (11, 12) angeschlossen ist, und daß elektrische Anschlußmittel dazu ausgebildet sind, um gesteuert einen elektrischen Strom in dem eingegrenzten Leitungsabschnitt und/oder in dem Leitungselement, insbesondere entlang einer beliebigen vorbestimmten Folge von elementaren Stromzweigen des eingegrenzten Leitungsabschnitts und/oder des Leitungselements, fließen zu lassen.

14. Zelle (61) nach Anspruch 13, dadurch gekennzeichnet, daß die elektrischen Anschlußmittel zumindest einen elektrischen Kontakt mit der Leitung (2) umfassen, der in Richtung letzterer beweglich ausgebildet ist, um den eingegrenzten Leitungsabschnitt (2c) und/oder das Leitungselement (2a) gesteuert in einen elektrischen Stromkreis einzubinden.

15. Zelle (61) nach Anspruch 13, dadurch gekennzeichnet, daß die elektrischen Anschlußmittel eine Mehrzahl von elektrischen Anschlußklemmen umfassen, die in Richtung der Leitung verteilt sind, und wobei die Stromzweige mit den Anschlußklemmen ausgebildet sind, um den eingegrenzten Leitungsabschnitt (2c) und/oder das Leitungselement (2a) gesteuert in einen elektrischen Stromkreis einzubinden.

16. Vorrichtung zur Behandlung einer Probe eines Fluids, mit einer elementaren Zelle (61) nach einem der Ansprüche 8 bis 15, dadurch gekennzeichnet, daß der Eingang (11a) eines statischen Einfrierungsventils (11) in Umwälz- oder Behandlungsrichtung der Probe stromaufwärts mit einem Entnahmemittel (71) für die Probe verbunden ist, und der Ausgang (12b) eines weiteren statischen Einfrierungsventils (12) stromabwärts mit einem Umwälzmittel (72) für die Probe, bspw. einer Pumpe, verbunden ist.

17. Verwendung einer elementaren Zelle nach einem der Ansprüche 8 bis 14 zur Behandlung einer Probe des Fluids, insbesondere einer biologischen Probe in dem eingegrenzten Abschnitt (2c) der Leitung (2).

18. Verfahren zum Steuern eines Stroms eines im wesentlichen einphasigen Fluids, das in einer Leitung (2) aufgenommen ist, bei dem in zumindest einem Steuerungsschritt das Fluid durch den Durchgang (2b) in der Leitung hindurch abwechselnd eingefroren, um letzteren zu verschließen, und das eingefrorene Fluid durch denselben Durchgang hindurch geschmolzen wird, um letzteren freizugeben, dadurch gekennzeichnet, daß während des Steuerungsschrittes das Fluid geschmolzen wird, indem man in dem Leitungskörper einen elektrischen Strom (5) fließen läßt, der durch Ohm'schen Effekt in Wärme dissipiert wird, die unmittelbar auf das Fluid übertragen wird.

19. Verfahren zum Eingrenzen eines einphasigen Fluids, bei dem zumindest ein Schritt zum Steuern eines Stromes des Fluids nach Anspruch 18 angewandt wird, dadurch gekennzeichnet, daß ein Abschnitt der Leitung, der einen Eingrenzungsbereich (2c) bildet, abgegrenzt wird, und daß an beiden Enden des Bereichs der Durchgang des Fluids nach zumindest einem Steuerungsschritt nach Anspruch 18 gesteuert wird (11, 12).

20. Verfahren nach Anspruch 19, dadurch gekennzeichnet, daß der Eingrenzungsbereich (2c) beheizt wird, indem man einen elektrischen Strom durch einen Leitungskörper fließen läßt, der durch Ohm'schen Effekt in Wärme dissipiert wird, die unmittelbar auf das Fluid übertragen wird, wodurch dieses seine Temperatur und/oder seinen Druck in Relation zu der Menge an übertragener Wärme erhöht.

## Claims

1. Static valve involving the freezing of a fluid, comprising:
- a tube element (2a) which is designed to receive the said fluid in the passage cross section (2b) and whose wall is thermally conductive;
- at least one heat source which heats and refrigerates in a controlled way and is arranged in thermal contact, in particular in heat exchange with the said tube element (2a), in order to change from a cold state in which the fluid can close off the passage (2a) through the said tube element in a leaktight manner by freezing, to a hot state in which the said fluid is liquefied or vaporized to release the said passage;
characterized in that, in combination:
(a) the said tube element (2a) is obtained from a material, in particular a metallic material, which is mechanically strong and can dissipate heat by the ohmic effect within itself in a controlled way, in order to constitute a hot source directly in its bulk;
(b) a cold source (3), which is separate from the said hot source and is designed and controlled only to refrigerate, remains on its own outside the said tube element (2a), in thermal contact, in particular in heat exchange with the said tube element.

2. Valve according to Claim 1, characterized in that the cold source (3) constitutes a relatively large refrigerating reservoir compared with the amount of refrigerating power needed for the said valve to change from the hot state to the cold state, and the heat dissipated by the ohmic effect in the tube element is set to a relatively large value, at least equal to that needed to cancel temporarily, and locally at the said valve, the refrigerating power transferred by the cold source to the said tube element, when the said valve changes from the cold state to the hot state.

3. Valve according to Claim 2, characterized in that the tube element (2a) is arranged in an enclosure containing a refrigerating bath forming the cold source (3).

4. Valve according to Claim 2, characterized in that the tube element (2a) is arranged in heat exchange with a tube for circulating a refrigerant.

5. Valve according to Claim 1, characterized in that the metallic material of the tube element (2a) is a metal alloy.

6. Valve according to Claim 1, characterized in that the tube element (2a) has a thickness of between 1 µm and 50 mm, and preferentially between 0.001 mm and 2 mm, and advantageously between 0.1 and 2 mm.

7. Valve according to Claim 6, characterized in that the tube element (2a) has an internal cross section at most equal to 50 mm, and preferentially between 0.001 mm and 2 mm.

8. Elongate elementary enclosure (61) equipped with at least one valve according to any one of Claims 1 to 5, characterized in that the said enclosure is constituted from one end to the other by the said tube (2), having in particular the same passage cross section over its entire length, of which at least one element (2a) associated both with the cold source (3) and with an electrical source (5) constitutes the said valve (11, 12).

9. Enclosure (61) according to Claim 8, characterized in that the tube element (2a) belonging to the said valve (11, 12) is arranged at one end of the said tube.

10. Enclosure (61) according to Claims 8 and 9, characterized in that two valves (11, 12) are arranged at the two ends of the said tube respectively, the said ends constituting the two tube elements (2a) of the valves (11, 12) respectively.

11. Enclosure according to Claim 8, characterized in that the cold source (3) and the electrical contact or contacts (5a, 5b) with the tube element (2a) belonging to the said valve (11, 12) are designed to be mobile along the said tube, by means of which the valve can be moved along the direction of the said tube.

12. Enclosure (61) according to Claim 10, characterized in that an electrical source (51b, 52b) is connected to the tube portion (2c) which is confined and contained between the two valves (11, 12), in order to pass an electric current in a controlled way through the said portion, dissipating heat directly into the said tube by the ohmic effect.

13. Enclosure (61) according to Claim 12, characterized in that one and the same electrical source is connected both to the tube portion (2c) which is confined and to the tube element (2a) of at least one valve (11, 12), and electrical connection means are designed to pass an electric current through the said confined portion and/or the said tube element, in a controlled way, in particular according to any preestablished sequence of elementary electrical connections of the said confined portion and/or the said tube element.

14. Enclosure (61) according to Claim 13, characterized in that the electrical connection means comprise at least one electrical contact to the said tube (2), designed to be mobile along the direction of the latter, in order to include the said confined portion (2c) and/or the said tube element (2a) in an electrical circuit in a controlled way.

15. Enclosure (61) according to Claim 13, characterized in that the electrical connection means comprise a plurality of electrical connection terminals, which are distributed along the direction of the tube, and electrical connections designed, with the said connection terminals, to include the said confined portion (2c) and/or the said tube element (2a) in an electrical circuit in a controlled way.

16. Device for processing a sample of the fluid, comprising an elementary enclosure (61) according to any one of Claims 8 to 15, characterized in that the intake (11a) of a static freezing valve (11), upstream in the flow or processing direction of the said sample, is connected to a means (71) for taking the said sample, and the output (12b) of another, downstream, static freezing valve (12) is connected to a means (73) for circulating the said sample, for example a pump.

17. Application of an elementary enclosure according to any one of Claims 8 to 14 to the processing of a sample of the said fluid, in particular a biological sample, in the confined portion (2c) of the tube (2).

18. Process for controlling a substantially single-phase fluid stream received in a tube (2), according to which, in at least one control step, alternately, the said fluid is frozen through the passage (2b) in the said tube, in order to close off the latter, and the said frozen fluid is melted through the same said passage, in order to release the latter, characterized in that, during the control step, the said fluid is melted by passing an electric current (5) through the bulk of the tube, dissipating by the ohmic effect heat which is transferred directly to the said fluid.

19. Process for confining a single-phase fluid, employing at least one step of controlling a stream of the said fluid according to Claim 18, characterized in that a portion of the said tube is delimited, forming a confinement zone (2c), and the passage of the fluid is controlled (11, 12) at each of the two ends of the said zone using at least one said control step of Claim 18.

20. Process according to Claim 19, characterized in that the confinement zone (2c) is heated by passing an electric current through the bulk of the tube, dissipating by the ohmic effect heat which is transferred directly to the said fluid, which has its temperature and/or its pressure rise in relation with the amount of heat transferred.
